## Europäisches Patentamt
## European Patent Office
## Office européen des brevets

(19)

(11) Numéro de publication : **0 027 082**
**B1**

(12)

# FASCICULE DE BREVET EUROPÉEN

(45) Date de publication du fascicule du brevet :
20.04.83

(51) Int. Cl.³ : **F 16 N 19/00**

(21) Numéro de dépôt : **80401400.9**

(22) Date de dépôt : **03.10.80**

(54) **Graissage des mécanismes du genre réducteur de vitesse.**

(30) Priorité : **04.10.79 FR 7924936**

(43) Date de publication de la demande :
**15.04.81 Bulletin 81/15**

(45) Mention de la délivrance du brevet :
**20.04.83 Bulletin 83/16**

(84) Etats contractants désignés :
**BE DE GB IT SE**

(56) Documents cités :
**FR A 859 673**
**FR A 1 367 219**
**FR A 2 337 634**
**US A 2 465 523**
**US A 4 020 715**

(73) Titulaire : **Société Industrielle de Transmissions Société Anonyme dite:**
**120, rue Danton**
**F-92302 - Levallois-Perret (FR)**

(72) Inventeur : **Latour, Claude**
**11, rue de la Porte Jaune**
**F-92380 - Garches (FR)**

(74) Mandataire : **Lernould, René**
**6, Avenue Kléber**
**F-75116 Paris (FR)**

Jouve, 18, rue St-Denis, 75001 Paris, France

## Graissage des mécanismes du genre réducteur de vitesse

La présente invention est relative au graissage des mécanismes du genre des réducteurs et multiplicateurs de vitesse à engrenages, comprenant un carter étanche à bain d'huile pouvant être monté sur au moins deux de ses plans d'appui, selon au moins deux positions orthogonales possibles.

Pour assurer le remplissage, le niveau et la vidange de l'huile du carter, on fait habituellement appel à plusieurs éléments distincts, tels qu'un bouchon de remplissage, un bouchon de vidange, un bouchon de niveau, un voyant de niveau ainsi qu'une jauge.

La présente invention a précisément pour but, d'une part de trouver une solution permettant de remplir les fonctions des divers éléments précités, de façon plus simple, et d'autre part d'assurer le graissage des mécanismes du genre en question dont le carter présente plusieurs positions de montage possibles.

En effet, de par la forme non symétrique du carter ou de par l'absence de symétrie globale du mécanisme résultant de l'emplacement particulier des arbres d'entrée et de sortie, un certain nombre de ces mécanismes comportent un carter agencé pour pouvoir être monté sur deux ou plusieurs de ses plans d'appui, selon au moins deux directions orthogonales possibles. Il est clair que, dans pareil cas, l'emplacement des systèmes de remplissage de niveau et de vidange pose des problèmes particulièrement délicats.

La présente invention concerne donc un mécanisme à carter étanche contenant un bain d'huile de graissage pouvant être monté suivant au moins deux positions d'appui orthogonales, le mécanisme selon l'invention étant caractérisé en ce que l'orifice de vidange reçoit un organe d'obturation de niveau et de vidange se présentant sous la forme d'un corps essentiellement tubulaire dont l'orifice axial se prolonge vers l'intérieur du carter par un tube de longueur convenable orienté obliquement par rapport au plan d'appui du carter, ledit orifice axial pouvant être obturé par un bouchon du côté extérieur audit carter, et en ce que ledit organe est disposé sur ledit carter au voisinage immédiat du sommet du dièdre déterminé par deux plans d'appui adjacents.

D'autres caractéristiques et avantages de la présente invention apparaîtront à la lecture détaillée faite ci-après en référence aux dessins annexés sur lesquels :

La figure 1 représente une vue en coupe d'un organe d'obturation de niveau et de vidange ;

La figure 2 représente une vue en coupe d'un carter de réducteur de vitesse à engrenages, disposé selon une première position de montage possible ;

La figure 3 représente le carter de la figure 2 disposé selon une seconde position de montage possible, orthogonale à la précédente, et

La figure 4 représente un carter de réducteur présentant trois faces d'appui possibles.

On rappellera brièvement que les réducteurs sont des appareils destinés à transformer une vitesse d'entrée N en une vitesse de sortie N' inférieure à N. Lorsqu'un réducteur est réversible, cet appareil peut également être utilisé en tant que multiplicateur. Il est parfaitement clair que la précédente invention s'applique aussi bien aux réducteurs de vitesse, qu'aux réducteurs-inverseurs ou multiplicateurs.

De façon classique, les réducteurs contiennent des couples d'engrenage, schématisés en 10 sur les dessins annexés, qui sont groupés au sein du même carter 12. Le carter 12 est habituellement réalisé en fonte, en acier moulé ou en tôle soudée et sert simultanément de réservoir d'huile.

Le réducteur de vitesse à engrenage selon l'invention est du type à graissage par barbotage d'huile, ce moyen de lubrification étant suffisant pour des engrenages de réducteurs soumis à des vitesses pas trop élevées.

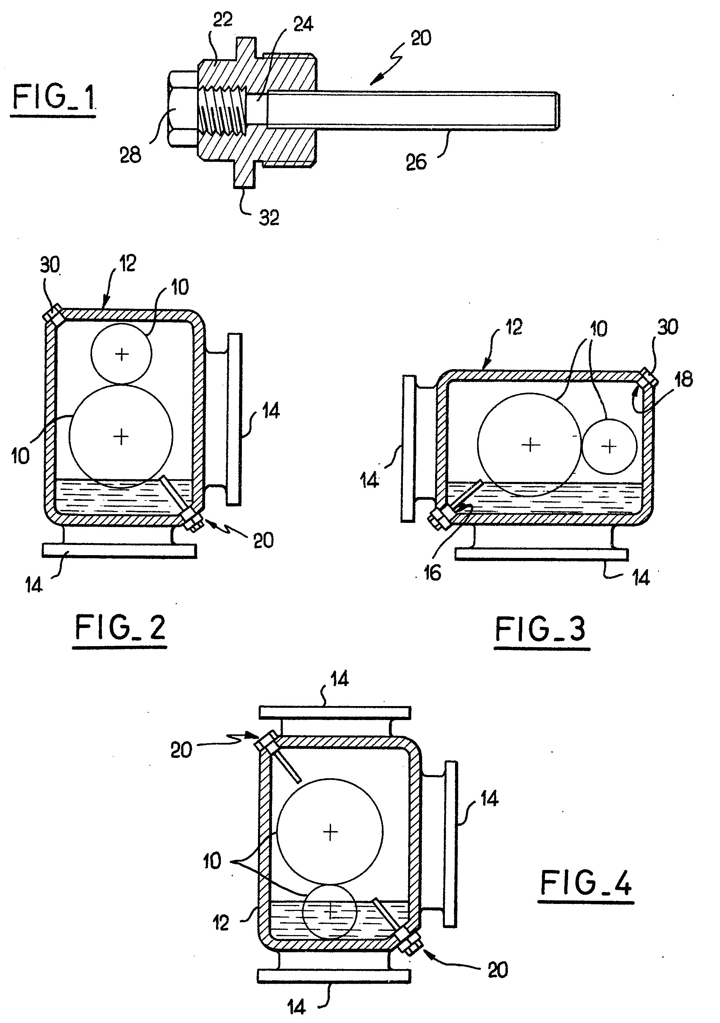

Comme indiqué précédemment, une des propriétés des réducteurs de la présente invention est de présenter au moins deux positions de montage possibles sur au moins deux plans d'appui, comme cela se trouve illustré aux figures 2 à 4. Dans la pratique, de tels carters 12 peuvent être montés, en fonction de l'emplacement disponible et en fonction du raccordement des arbres d'entrée et de sortie, selon l'une ou l'autre des diverses positions orthogonales possibles grâce à la présence simultanée de plusieurs semelles de fixation 14 sur un même carter 12.

De façon classique, de tels carters 12 présentent à leur partie inférieure au moins un orifice de vidange 16, et à leur partie supérieure au moins un orifice de remplissage 18. L'orifice de vidange 16 du carter du réducteur de la présente invention reçoit un organe d'obturation, de niveau et de vidange 20.

Un tel organe 20 se présente sous la forme d'un corps essentiellement tubulaire 22 dont l'orifice axial 24 se prolonge vers l'intérieur du carter 12 par un tube de trop-plein 26 qui présente une longueur convenable et qui doit être orienté obliquement par rapport au plan d'appui du carter. Par ailleurs, cet orifice axial 24 doit bien entendu pouvoir être obturé par un bouchon 28, du côté extérieur au carter 12. Enfin, comme illustré sur les dessins annexés, l'organe 20 est disposé sur le carter 12, au voisinage immédiat du sommet du dièdre déterminé par deux plans d'appui adjacents correspondant aux surfaces d'appui des semelles 14.

De façon préférentielle, le tube de trop-plein 26 se situe sensiblement dans le plan bissecteur du dièdre déterminé par les deux plans d'appui adjacents. Il est clair que l'inclinaison exacte ainsi que la longueur du tube de trop-plein 26 seront déterminées dans chaque cas particulier en fonction du niveau d'huile de lubrification que l'on cherche à atteindre à l'intérieur du carter 12, dans l'une ou l'autre des diverses positions orthogonales de montages possibles.

Selon une caractéristique particulière de la présente invention, il est possible de prévoir un montage par vissage du tube de trop plein 26 dans le corps tubulaire 22, ce qui permet de modifier le niveau de l'huile de lubrification dans le carter, en remplaçant un tube 26 par un tube de longueur différente.

De façon avantageuse le tube de trop plein 26 est orienté sensiblement de façon perpendiculaire à l'arête du dièdre déterminé par les deux plans d'appui adjacents.

Selon une autre caractéristique de la présente invention, les orifices de remplissage 18 et de vidange 16 se trouvent diamétralement opposés. Dans le cas particulier de la figure 4, c'est-à-dire dans le cas d'un carter présentant trois faces d'appui possibles, l'orifice de remplissage 18 est également équipé d'un organe d'obturation, de niveau et de vidange 20.

Selon une autre caractéristique de la présente invention, les bouchons de remplissage 30 et les corps tubulaires 22 des organes d'obturation, de niveau et de vidange 20 sont fixés par vissage dans les orifices correspondants 18 et 16 du carter. Selon un mode de réalisation préférentiel de la présente invention, les filetages d'une part des orifices 16 et 18 du carter, et d'autre part des bouchons de remplissage 30 et des corps 22 des organes 20 sont identiques entre eux, ce qui permet d'interchanger les bouchons de remplissage 30 et les organes 20 en fonction de la position de montage choisie.

Pour faire le niveau dans le carter 12, il suffit de l'alimenter en huile et de dévisser le bouchon 28 de l'organe d'obturation de niveau et de vidange 20, l'écoulement par le tube de trop-plein 26 assurant ainsi la remise à niveau automatique. Lorsque ce niveau est fait, il suffit de remettre en place le bouchon 28.

En revanche, lorsqu'on désire effectuer la vidange du carter 12, on dévissera l'ensemble de l'organe d'obturation de niveau et de vidange 20, c'est-à-dire que l'on dévissera le corps tubulaire fileté 22, ce qui permettra un écoulement plus important et plus rapide de l'huile à vidanger.

On notera par ailleurs que le corps tubulaire fileté 22, destiné à être monté par vissage dans un orifice du carter 12, présente une bride périphérique 32 limitant la profondeur de vissage de l'organe 22 dans le carter et permettant l'interposition d'un joint d'étanchéité.

Bien entendu, la présente invention ne se limite pas aux modes de réalisation particuliers décrits, mais il est parfaitement possible, sans pour autant sortir du cadre de la présente invention, d'imaginer d'autres mécanismes du genre réducteurs ou multiplicateurs à positions multiples de montage, présentant un certain nombre de variantes de construction.

## Revendications

1. Mécanisme à carter étanche contenant un bain d'huile de graissage pouvant être monté suivant au moins deux positions d'appui orthogonales, du genre réducteur ou multiplicateur de vitesse à engrenages caractérisé en ce que l'orifice de vidange (16) du carter (12) reçoit un organe d'obturation, de niveau et de vidange (20), se présentant sous la forme d'un corps essentiellement tubulaire (22) dont l'orifice axial (24) se prolonge vers l'intérieur du carter (12) par un tube de longueur convenable (26), orienté obliquement par rapport au plan d'appui du carter, ledit orifice (24) pouvant être obturé par un bouchon (28) du côté extérieur audit carter, et en ce que ledit organe (20) est disposé sur le carter (12) au voisinage immédiat du sommet du dièdre déterminé par deux plans d'appui adjacents.

2. Mécanisme selon la revendication 1, caractérisé en ce que ledit tube (26) se situe sensiblement dans le plan bissecteur du dièdre déterminé par les deux plans d'appui adjacents.

3. Mécanisme selon l'une des revendications 1 ou 2, caractérisé en ce que le carter (12) comprend, en un point diamétralement opposé à l'organe de niveau et de vidange (20), un bouchon de remplissage (30) interchangeable avec le corps de cet organe.

4. Mécanisme selon l'une des revendications 1 à 3, caractérisé en ce que, lorsque le carter (12) présente au moins trois faces d'appui possible, l'orifice de remplissage est également équipé d'un organe d'obturation, de niveau et de vidange.

## Claims

1. Mechanism comprising a sealed case containing a lubricating oil bath capable of being mounted in at least two orthogonal support positions, of the geared speed reduction or overdrive type, characterised in that the draining orifice (16) of the case (12) receives a sealing, levelling and draining member (20) which is in the form of a substantially tubular element (22) the axial orifice (24) of which is extended towards the inside of the case (12) by a tube (26) of appropriate length directed obliquely with respect of the case support plane, the said orifice (24) being capable of being shut off by a plug (28) at the outer side of the said case, and in that the said element (20) is disposed on the case (12) in direct proximity to the apex of the dihedron delimited by two adjacent support planes.

2. Mechanism according to claim 1, characterised in that the said tube (26) is situated substantially in the bisector plane of the dihedron delimited by the two adjacent support planes.

3. Mechanism according to one of the claims 1 or 2, characterised in that the case (12) comprises — at a point diametrically opposed to the levelling and draining member (20) — a filler plug (30) interchangeable with the barrel of this member.

4. Mechanism according to one of the claims 1 to 3, characterised in that if the case (12) has at least three possible support surfaces, the filler orifice is also provided with a sealing, levelling and draining element.

## Ansprüche

1. Mechanismus, beispielsweise Geschwindigkeitsuntersetzungs- oder -übersetzungsgetriebe mit einem ein Schmierölbad enthaltenden dichten Gehäuse, das in zumindest zwei zueinander orthogonalen Auflagestellungen montierbar ist, dadurch gekennzeichnet, daß die Ablaßöffnung (16) des Gehäuses (12) ein Verschließ-, Pegelbestimmungs- und Ablaßelement (20) in Form eines im wesentlichen rohrförmigen Körpers (22) enthält, dessen Axialöffnung (24) vermittels eines Rohres (26) geeigneter Länge, das schräg in Bezug auf die Auflageebene des Gehäuses verläuft, bis in das Innere des Behälters (12) verlängert ist, wobei die Öffnung (24) von der Gehäuseaußenseite her durch einen Verschlußstopfen (28) verschließbar ist, und daß das Element (20) auf dem Gehäuse (12) unmittelbar im Bereich des Scheitels des durch zwei einander benachbarte Auflageebenen bestimmten Flächenwinkels angeordnet ist.

2. Mechanismus nach Anspruch 1, dadurch gekennzeichnet, daß das Rohr (26) im wesentlichen in der Winkelhalbierungsebene des durch die zwei einander benachbarte Auflageebenen bestimmten Flächenwinkels liegt.

3. Mechanismus nach einem der Ansprüche 1 oder 2, dadurch gekennzeichnet, daß das Gehäuse (12) an einem dem Pegelbestimmungs- und Ablaßelement (20) diametral entgegengesetzten Punkt einen gegen den Körper des Elements austauschbaren Einfüllstopfen (30) aufweist.

4. Mechanismus nach einem der Ansprüche 1 bis 3, dadurch gekennzeichnet, daß bei einem Gehäuse (12) mit zumindest drei wahlweise verwendbaren Auflageflächen die Einfüllöffnung ebenfalls mit einem Verschließ-, Pegelbestimmungs- und Ablaßelement versehen ist.

0 027 082

FIG_1

FIG_2

FIG_3

FIG_4

1